(19) Europäisches Patentamt
European Patent Office
Office européen des brevets

(11) Veröffentlichungsnummer: **0 171 570**
**B1**

# (12) EUROPÄISCHE PATENTSCHRIFT

(45) Veröffentlichungstag der Patentschrift: **24.05.89**

(51) Int. Cl.⁴: **B 01 D 53/34**, C 01 B 17/775

(21) Anmeldenummer: **85108131.5**

(22) Anmeldetag: **02.07.85**

## (54) Verfahren und Vorrichtung zum Entfernen von Schwefeldioxid aus heissen Abgasen.

(30) Priorität: **06.07.84 LU 85454**

(43) Veröffentlichungstag der Anmeldung
**19.02.86 Patentblatt 86/8**

(45) Bekanntmachung des Hinweises auf die Patenterteilung:
**24.05.89 Patentblatt 89/21**

(84) Benannte Vertragsstaaten:
**AT BE CH DE FR GB IT LI LU NL SE**

(56) Entgegenhaltungen:
**EP-A- 0 016 290**
**FR-A- 1 450 590**
**US-A- 1 332 581**

(73) Patentinhaber: **EUROPÄISCHE ATOMGEMEINSCHAFT (EURATOM), Bâtiment Jean Monnet Plateau du Kirchberg Boîte Postale 1907, L-1019 Luxembourg (LU)**

(72) Erfinder: **Langenkamp, Heinrich W., Via Matteotti 112, I-21027 Cadrezzate (Va) (IT)**
Erfinder: **Van Velzen, Daniel, Via Buonarroti 9, I-21020 Brebbia (Va) (IT)**

(74) Vertreter: **Weinmiller, Jürgen, Lennéstrasse 9 Postfach 24, D-8133 Feldafing (DE)**

**EP 0 171 570 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Vorrichtung zum Entfernen von Schwefeldioxid aus heissen Abgasen gemäss dem Oberbegriff des Anspruchs 1.

Eine solche Vorrichtung ist aus der Druckschrift EP-B1 0 016 290 bekannt. Hierbei entsteht eine Schwefelsäure von einer Konzentration, die grösser als 80 Gew.-% ist, sofern die Temperatur der Abgase mindestens 180 °C beträgt. In modernen Kraftwerken ist diese Voraussetzung aber leider nicht immer erfüllt: Zum einen versucht man aus Gründen des Umweltschutzes die Abgastemperaturen am Kaminaustritt des Kraftwerks soweit abzusenken, wie dies ohne Schaden für den Kamin noch möglich ist, zum anderen schwanken die Abgastemperaturen stark mit dem Lastfaktor des Kraftwerks. So kann beispielsweise die Abgastemperatur, die bei Vollast 150 °C beträgt, bei einem Lastfaktor von 0,3 auf 100 °C absinken. Es ist klar, dass bei so niedrigen Abgastemperaturen der von den Abgasen erwärmte Konzentrator nicht mehr sehr wirksam ist und dass die für ein verkaufsfähiges Produkt notwendige Konzentration der Schwefelsäure von mindestens 75 Gew.-% nicht mehr annähernd erreicht werden kann.

Aufgabe der Erfindung ist es daher, eine Vorrichtung der eingangs genannten Art anzugeben, derart, dass auch bei absinkender Abgastemperatur ein hoher Konzentrationsgrad der Schwefelsäure erhalten bleibt. Diese Aufgabe wird durch die im Anspruch 1 definierte Vorrichtung gelöst.

Bezüglich von Merkmalen einer bevorzugten Ausführungsform der Erfindung wird auf den Unteranspruch verwiesen.

Nachfolgend wird die Erfindung anhand der einzigen Zeichnung näher erläutert, die schematisch eine bevorzugte Form der erfindungsgemässen Vorrichtung zeigt.

Die Vorrichtung besteht aus sechs Haupteinheiten, nämlich einem Vorkonzentrator 1, einem Nachkonzentrator 2, einem Reaktor 3, einer Elektrolysezelle 4, einer Waschkolonne 5 und einem Wärmetauscher 6. Der Vorkonzentrator 1, der Reaktor 3, die Waschkolonne 5 und der Wärmetauscher 6 werden in Reihe von einem kleinen Teil der zu reinigenden Abgase durchströmt.

Der grössere Rest durchfliesst zuerst den Wärmetauscher 6, um dort den gereinigten Abgasstrom auf eine für den Kamin optimale Temperatur zu erwärmen, und wird dann dem ersten Teilstrom am Eingang des Reaktors zugefügt. Der Nachkonzentrator 2 wird mit Hochtemperaturabgasen gespeist, die direkt hinter dem Economiser des nicht dargestellten Wärmekraftwerks entnommen werden und nach dem Durchtritt durch diesen Konzentrator den in den Vorkonzentrator 1 eintretenden Abgasen zugemengt werden. Alternativ könnte auch heisse Luft verwendet werden, die aus einem Luftvorwärmer des Kraftwerks stammt.

In den Konzentratoren 1 und 2 wird die Bromwasserstoffsäure aus dem erwärmten Säuregemisch verdampft und mit den Abgasen mitgerissen, während die höher siedende Schwefelsäure sich anreichert. Im Reaktor gelangen die Abgase mit in Wasser gelöstem Brom in Kontakt, so dass folgende Reaktion abläuft:

$$SO_2 + Br_2 + 2\,H_2O \rightarrow H_2SO_2 + 2\,HBr$$

d.h. es entsteht das erwähnte Säuregemisch. Um diesen Kontakt zu intensivieren, wird das Gemisch stetig umgewälzt und dabei immer wieder im Reaktor versprüht. Ein Teil dieses Gemisches wird stetig in den Vorkonzentrator eingesprüht und ein anderer in die Elektrolysezelle 4 eingespeist. Diese Zelle wird in bekannter Weise über Graphitelektroden mit Gleichstrom versorgt und spaltet Bromwasserstoffsäure HBr in molekulares Brom und in Wasserstoff auf. Das Brom gelangt dann zusammen mit dem Rest des Gemisches wieder in den Reaktor zurück, während der Wasserstoff als verkaufsfähiges Produkt aufgefangen wird.

In der Waschkolonne 5 wird Wasser im geschlossenen Kreislauf immer wieder von oben eingesprüht, während die gereinigten Abgase im Gegenstrom die Kolonne durchfliessen. Der Wasserverlust, der sich durch Verdampfen im Reaktor 3 einstellt und zu einer Erhöhung des Wasserstands in der Waschkolonne führen würde, wird dadurch wieder ausgeglichen, dass ein Teil des Wassers aus der Waschkolonne in den Reaktor zurückgepumpt wird.

In üblicher Weise werden die in die Konzentratoren, den Reaktor und die Waschkolonne einzuspeisenden Flüssigkeiten durch Pumpen 7 bis 11 auf das für das Einsprühen nötige Druckniveau gebracht.

Nun werden Betriebsparameter einer Pilotanlage vorgelegt, die in der Lage ist, einen Abgasdurchsatz von 20000 m³/h zu reinigen. Die Durchsatzangaben beziehen sich auf Normaldruck und Umgebungstemperatur. Es werden jeweils die Werte für Vollast und für eine Teillast mit einem Lastfaktor von 0,3 nebeneinander angegeben. Die zu reinigenden Abgase setzen sich wie folgt zusammen:

Stickstoff 72,9/75 Vol.-%
Kohlendioxid 14/11 Vol.-%
Wasser 9/5 Vol.-%
Sauerstoff 4/9 Vol.-%
Schwefeldioxid 790/470 ppm
gesamter Abgasfluss 20000/6000 m³/h.

Von dem Gesamtabgasfluss gelangen 66,3/64,4 Vol.-% in den Wärmetauscher 32,0/33,1 Vol.-% in den Hauptkonzentrator und 1,7/2,5 Vol.-% stammen vom Economizer des Kraftwerks und gelangen in den Nachkonzentrator.

Die Temperatur der ungereinigten Abgase vor dem Wärmetauscher beträgt 150/100 °C und hinter dem Wärmetauscher 90/75 °C. Die Temperatur der gereinigten Abgase beträgt vor dem Wärmetauscher 41,7/30,9 °C und hinter dem Wärmetauscher 82/47 °C. Die Schwefelsäurekonzentration liegt in beiden Betriebsfällen im Hauptkonzentrator bei 50% und im Nachkonzentrator bei 95%. Im Reaktor befinden sich neben geringen Mengen molekularen Broms in beiden Lastfällen etwa 15% Bromwasserstoffsäure und 15% Schwefelsäure. Der Rest ist Wasser.

Wählt man im Reaktor einen höheren Bromanteil, d.h. 20% Bromwasserstoffsäure und 10% Schwefelsäure, dann wählt man einen höheren Anteil, nämlich 51% des gesamten Abgasflusses für die Einspeisung in den Konzentrator 1 und einen geringeren Anteil, nämlich 47,3%, für die Aufheizung der gereinigten Abgase. Letztere gelangen dann bereits mit einer Temperatur von 41,7°C in den Wärmetauscher und heizen sich dort auf 70°C auf.

Wenn auch die obengenannten Zahlenbeispiele für eine Pilotanlage typisch und günstig sind, so ist die Erfindung nicht auf diese Beispiele beschränkt. Insbesondere bei einer Grossanlage kann die Aufteilung des gesamten Abgasflusses abhängig von der geforderten Mindesttemperatur der gereinigten Abgase am Eingang des Kamins wesentlich anders gewählt werden. Soll etwa die Temperatur der gereinigten Abgase am Ausgang des Wärmetauschers 100°C betragen, dann kann man beispielsweise 71% der zu reinigenden Abgase zur Aufheizung der gereinigten Abgase im Wärmetauscher heranziehen, 23% dem Hauptkonzentrator und 6% dem Nachkonzentrator zuführen.

## Patentansprüche

1. Vorrichtung zum Entfernen von Schwefeldioxid aus heissen Abgasen eines Wärmekraftwerks, mit einem Reaktor (3), der von den Abgasen durchströmt und mit einer wässrigen Bromlösung gespeist wird, mit einer Elektrolysezelle (4), in der im Reaktor (3) entstehende Bromwasserstoffsäure in wieder einspeisbares Brom und in Wasserstoff aufgespalten wird, und mit einem von den heissen Abgasen durchströmten Konzentrator (1), der die im Reaktor (3) entstehende Schwefelsäure durch Eindampfen konzentriert, dadurch gekennzeichnet, dass dem Konzentrator (1) ein Nachkonzentrator (2) nachgeordnet ist, in den Abgase eingespeist werden, die unmittelbar hinter dem Economizer des Kraftwerks entnommen werden und dass ein Gaswärmetauscher (6) vorgesehen ist, der einerseits die gereinigten Abgase zugeführt erhält und an einen Kamin abgibt und andererseits einen Teilstrom der ungereinigten heissen Abgase empfängt und an den Reaktor (3) abgibt.

2. Vorrichtung nach Anspruch 1, dadurch gekennzeichnet, dass eine Waschkolonne (5) für die aus dem Reaktor (3) austretenden gereinigten Abgase vorgesehen ist.

## Claims

1. A device for eliminating sulphur dioxide from hot flue gases in a thermal power plant, comprising a reactor (3) which is traversed by the flue gases and fed with an aqueous bromine solution, an electrolysis cell (4), in which hydrobromic acid produced in the reactor (3) is separated into re-usable bromine and in hydrogen, and a concentrator (1) traversed by the hot flue gases and concentrating by evaporation the sulphuric acid which is produced in the reactor (3), characterized in that the concentrator (1) is followed by a post-concentrator (2), into which flue gases are fed, which are withdrawn immediately downstream of an economizer of a power plant, and that a gas heat exchanger (6) is provided, which is fed on the one hand with the cleaned flue gases and transmits them to a chimney and which is fed on the other hand with a partial flow of the uncleaned flue gases and transmits them to the reactor (3).

2. A device according to claim 1, characterized in that a washing column (5) is provided for the flue gases coming from the reactor (3).

## Revendications

1. Dispositif pour éliminer du dioxide de soufre des gaz chauds d'échappement d'une centrale thermique, comprenant un réacteur (3) qui est parcouru par les gaz d'échappement et qui est alimenté en une solution aqueuse de brome, une cellule électrolytique (4) permettant de transformer du HBr produit dans le réacteur (3) en brome recirculable et en hydrogène, et un concentrateur (1) parcouru par les gaz chauds d'échappement et servant à concentrer par évaporation l'acide de soufre produit dans le réacteur (3), caractérisé en ce que le concentrateur (1) est suivi d'un post-concentrateur (2) recevant des gaz d'échappement prélevés directement en aval de l'économiseur de la centrale, et qu'un échangeur de chaleur (6) des gaz, qui, d'une part, reçoit les gaz purifiés et les fournit à une cheminée, et qui, d'autre part, reçoit un flux partiel des gaz chauds non purifiés et les fournit au réacteur (3).

2. Dispositif selon la revendication 1, caractérisé en ce qu'une colonne de lavage (5) est prévue pour les gaz purifiés sortant du réacteur (3).

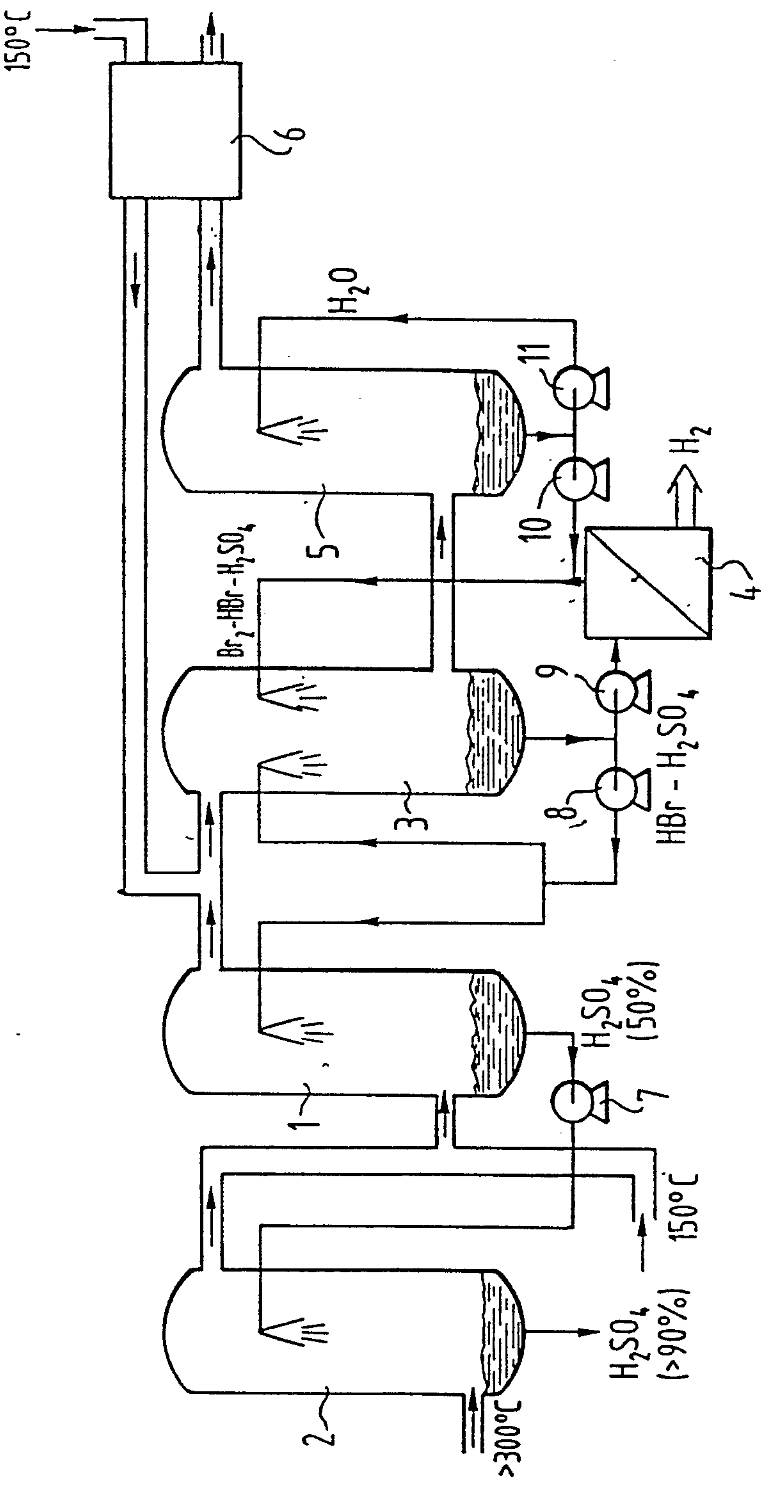
150°C
6
$H_2O$
$Br_2$-HBr-$H_2SO_4$
5
11
10
$H_2$
4
9
8
HBr - $H_2SO_4$
3
$H_2SO_4$ (50%)
7
1
150°C
$H_2SO_4$ (>90%)
2
>300°C